# EUROPÄISCHE PATENTSCHRIFT

(11) **EP 1 342 622 B1**
(45) Veröffentlichungstag und Bekanntmachung des Hinweises auf die Patenterteilung: **04.01.2006**
(21) Anmeldenummer: 03002861.7
(22) Anmeldetag: 08.02.2003
(51) Int. Cl.: B60R 25/00

(54) **Komponententausch-Warnsystem**
Component Exchange warning system
Système d' avertissement d'échange de composant

(30) Priorität: 05.03.2002 DE 10209766
(43) Veröffentlichungstag der Anmeldung: 10.09.2003
(73) Patentinhaber: DaimlerChrysler AG, 70567 Stuttgart (DE)
(72) Erfinder: Geber, Michael, 72574 Bad Urach (DE); Hubrig, Jürgen, 88212 Ravensburg (DE); Ohle, Jörn-Marten, 71229 Leonberg (DE)

(56) Entgegenhaltungen:
- DE-A- 3 313 481
- DE-A- 19 959 615

## Beschreibung

Die Erfindung betrifft ein Komponententausch-Warnsystem für ein Verkehrsmittel, welches den unautorisierten Aus- oder Einbau einer Komponente des Verkehrsmittels überwacht, wobei das Komponententausch-Warnsystem ein erstes mit dem Verkehrsmittel verbundenes Kommunikationsmittel, ein zweites mit der Komponente verbundenes Kommunikationsmittel und eine Berechtigungsprüfelektronik aufweist, die prüft, ob die mit dem zweiten Kommunikationsmittel verbundene Komponente in dem für sie vorgesehenen Verkehrsmittel autorisiert eingebaut ist.

Sicherheitsfunktionen und Komfortfunktionen im Verkehrsmittel werden zunehmend mit elektrischen bzw. elektronischen Steuergeräten und den dazugehörigen Sensoren und Aktoren umgesetzt. Beispielsweise bei Kraftfahrzeugen sind Steuergeräte für Airbagfunktionen und als dazugehörender Aktor ein Airbag vorgesehen. Aber auch im Komfortbereich werden Kraftfahrzeuge mit komplexen elektronischen Systemen versehen, die bei der Produktion im Kraftfahrzeug fest eingebaut werden, jedoch bei deren Ausfall in einer Werkstatt als komplettes Modul ausgetauscht werden. Aufgrund der Kosten für derartig komplizierte Komfort- und Sicherheitssysteme vermehren sich die Fälle, bei denen ganze elektronische Komponenten durch unautorisierte Personen, beispielsweise im Rahmen eines Diebstahls, aus dem Verkehrsmittel ausgebaut werden und in andere Unfallfahrzeuge oder gestohlene Fahrzeuge eingebaut werden. Im Gegensatz zu herkömmlichen Diebstahlsystemen und Alarmanlagen, die den Diebstahl des gesamten Fahrzeugs verhindern, werden aufgrund des Komponententausch-Warnsystems lediglich einzelne im Fahrzeug fest verbaute Komponenten zusätzlich gesichert. Dadurch kann der Austausch sicherheitskritischer Komponenten, deren Fehleinbau zu Folgeschäden führt, verhindert werden.

Die DE 195 41 742 C1 zeigt eine Diebstahlwarneinrichtung zur Sicherung des gesamten Kraftfahrzeugs. Die Diebstahlwarneinrichtung weist eine Funkstrecke auf, über die beispielsweise der Fahrzeugdiebstahl auf einen Funkrufempfänger, beispielsweise ein Mobiltelefon, automatisch gemeldet wird. Der Funkrufempfänger besitzt außerdem eine Signalschnittstelle, wodurch eine Wachzentrale bei einem Fahrzeugdiebstahl automatisch informiert werden kann. Bei dem offenbarten Ausführungsbeispiel wird ein Fahrzeug auf einem Parkplatz oder in einem Parkhaus durch die dort vorhandene Pförtnerloge auf Diebstahl hin überwacht und der Diebstahl wird parallel dazu an den Fahrzeugeigentümer weitergemeldet. Ein Warnsystem zur Überwachung einzelner innerhalb des Kraftfahrzeugs fest eingebauter Komponenten ist in der genannten Patentschrift nicht beschrieben.

In der DE 33 13 481 C2 ist eine Einrichtung zur Kennzeichnung und Identifizierung von Kraftfahrzeugen offenbart, wobei ein Hochfrequenzsender elektromagnetische Wellen aussendet, die von einem beispielsweise am Fahrzeugboden angebrachten elektronischen Baustein empfangen werden. Der elektronische Baustein ist bei unbefugtem Eingreifen oder Entfernen selbstzerstörend und enthält einen Hochfrequenzempfänger mit einer Antenne, so dass die elektromagnetischen Wellen in eine Versorgungsspannung für die Bauteile des elektronischen Bausteins umgewandelt werden, wodurch elektronische Daten gelesen und wieder eingespeichert werden können. Eine zusätzliche elektrische Stromversorgung für den elektronischen Baustein ist daher nicht erforderlich. In dem elektronischen Baustein werden spezifische Daten des Fahrzeugs vor dessen Produktion und spezifische Daten des Fahrzeugs während und nach dessen Produktion gespeichert. Durch zusätzliche Suchfunktionen ist eine gezielte Identifizierung der Fahrzeuge in einzelnen Produktionsstufen möglich und durch die Kennzeichnung des Fahrzeuges ist auch eine betriebsinterne Steuerung bei der Produktion, beim Einbau und bei der Vertriebssteuerung der Komponenten möglich. Der Hochfrequenzsender ist ein Transponder, der einerseits elektromagnetische Wellen absendet, um eine Lese- oder Schreibanforderung und gleichzeitig die Energieversorgung für den am Fahrzeug befestigten elektronischen Baustein zur Verfügung zu stellen. Im elektronischen Baustein werden Produktionsdaten bei der Fahrzeugherstellung abgelegt. In der Patentschrift ist keine Alarmanlage beschrieben, die bei Austausch spezieller Komponenten anspricht, sondern es handelt sich hier um ein Dokumentationssystem bei der Produktion, Wartung und beim Einsatz des Fahrzeugs.

Die DE 29 19 753 A1 beschreibt eine Einrichtung zur automatischen Identifizierung von Objekten mit einem ortsfesten Abfragegerät und einem am Objekt befestigten Antwortgerät. Für die Einrichtung zur automatischen Identifizierung sind gemäß Beschreibung verschiedene Anwendungsgebiete vorgesehen. Neben Identifizierung von Lebewesen und Dokumenten ist auch die Anwendung bei fälschungssicheren Kraftfahrzeugkennzeichen beschrieben. Dabei strahlt ein ortsfester Sender ein Abfragesignal ab, worauf ein im Kennzeichen angeordnetes elektronisches Bauelement die gespeicherten Kennzeichendaten an die ortsfesten Sender- und Empfängereinheiten zurücksendet. Es ist auch vorgesehen, Kraftfahrzeugdaten im elektronischen Baustein zu speichern. Werden vom elektrischen Baustein im Kennzeichen keine oder fehlerhafte Daten an den Transponder zurückübertragen, so lässt sich daraus die Fälschung des Kennzeichens oder der Diebstahl des Kennzeichens entnehmen. Es handelt sich dabei ebenfalls um ein Dokumentationssystem, bei dem Kennzeichen bzw. Kraftfahrzeugdaten im elektronischen Baustein am Kennzeichen gespeichert werden. Darüber hinaus ist das Kennzeichen eine außen am Kraftfahrzeug nach der Produktion angebaute Komponente, die beim Eigentümer bzw. Fahrzeughalterwechsel mehrfach während eines Fahrzeuglebens ausgetauscht wird.

Die DE 199 59 615 A1 beschreibt ein Diebstahlsicherungssystem für abmontierbare Fahrzeugteile, welches sich insbesondere zum Diebstahlschutz einer Fahrzeugantenne einsetzen lässt. Das Diebstahlsicherungssystem umfasst einen Detektor, der das zu sichernde Kraftfahrzeugteil in dessen Montageposition überwacht und an das Alarmsystem des Kraftfahrzeugs angebunden ist. Erfasst der Detektor, dass das zu schützende Kraftfahrzeugteil aus seiner Montageposition entfernt ist, wird ein Steuersignal für das Alarmsystem des Kraftfahrzeugs erzeugt, um einen entsprechenden Alarm auszulösen.

Die DE 100 15 307 A1 offenbart ein Verfahren zum Schutz miteinander vernetzter Geräte vor Diebstahl, bei welchem jedes der Geräte eine individuelle Kennung aufweist und die Kennung der übrigen individuellen Geräte in einem geschützten Speicher abgelegt hat. Beim Betreib des Systems vergleicht ein Gerät die von den anderen Geräten übermittelten Kennungen mit den im eigenen Speicher abgelegten Kennungen. Wird eine Abweichung zwischen übermittelten und gespeicherten Kennungen festgestellt, so deutet dies darauf hin, dass das Gerät aus der ursprünglichen Umgebung entfernt und in eine andere Umgebung eingesetzt worden ist. Dies wird als Indiz für einen Diebstahl gewertet und führt dazu, dass das Gerät in einen Diebstahlschutzzustand übergeht.

Es ist Aufgabe der vorliegenden Erfindung, ein Komponententausch-Warnsystem für innerhalb eines Verkehrsmittels bei der Herstellung eingebaute Komponenten vorzusehen, das bei unautorisiertem Aus- bzw. Einbau einer Komponente den Vorgang erkennt und ein Warnsignal erzeugt bzw. die Freischaltung der Komponente nicht zulässt.

Die vorliegende Aufgabe wird mit den Merkmalen der Ansprüche 1 oder 2 gelöst. Nach Anspruch 1 ist ein Kommunikationsmittel als Transponder ausgebildet, welcher ein Prüfsignal an das andere Kommunikationsmittel aussendet, wobei das andere Kommunikationsmittel aus dem elektromagnetischen Prüfsignal die Energie bezieht und ein Antwortsignal für den Transponder erzeugt, so dass die Berechtigungsprüfelektronik den nicht autorisierten Ausbau oder den Einbau einer nicht autorisierten Komponente feststellt und ein Warnmittel entweder die im Verkehrsmittel eingebaute Komponente in Bezug auf die Funktion sperrt oder ein Alarmsignal absendet.

Erfindungsgemäß wird durch Überwachung des Verkehrsmittels durch einen Transponder festgestellt, welche Komponenten innerhalb des Verkehrsmittels eingebaut sind. Der Transponder sendet elektromagnetische Wellen aus, so dass ein mit einer Komponente verbundenes Kommunikationsmittel ein Antwortsignal zurücksenden kann, welches dann durch den Empfänger des Transponders empfangen wird. Aufgrund der Kommunikation wird einerseits ein Öffnungscode übermittelt, der lediglich eine autorisierte Abfrage der Komponentendaten zulässt. Andererseits wird ein Codewort zur Komponente übertragen, wodurch auf das Verkehrsmittel rückgeschlossen werden kann, in dem die Komponente eingebaut ist.

Bei der Herstellerfirma wird dann vorab der Komponente eine Information einprogrammiert, aufgrund der ein zulässiger oder ein nicht autorisierter Einbau in einem Verkehrsmittel ermittelt werden kann. Die Komponente erkennt dann, ob sie in dem berechtigten Verkehrsmittel, beispielsweise dem Originalfahrzeug, verbaut ist. Sollte die Komponente in einem anderen Verkehrsmittel eingesetzt sein, erkennt die Komponente bzw. die Berechtigungsprüfelektronik der Komponente bei der Abfrage durch einen Transponder mit dem Code eines falschen Fahrzeugs den fehlerhaften oder nicht autorisierten Einbau. Die Berechtigungsprüfelektronik der Komponente kann dann die Funktionsfreigabe der Komponente verhindern, indem diese elektrisch nicht freigeschaltet wird. Andererseits kann ein Teil der Berechtigungsprüfelektronik eine Warnfunktion, d.h. ein Alarmsignal oder Diagnosedaten für ein Überwachungssystem abgeben. Dieses Wachsystem kann dann beispielsweise von Versicherungen, der Polizei oder auch vom Fahrzeughersteller ausgewertet werden.

Üblicherweise ist der Transponder am Fahrzeugchassis und ein elektronisches Bauteil mit dem zweiten Kommunikationsmittel fest an der Komponente befestigt. Es kann aber bei Komponenten mit eigener Stromversorgung auch vorgesehen sein, dass der Transponder an der Komponente vorgesehen ist und das Antwortsignal vom Kommunikationsmittel am Verkehrsmittel ausgesendet wird. Ist der Transponder defekt, kann vorgesehen sein, dass ein neuer Transponder nur über eine spezielle Diagnosefunktion in der Komponente oder beim Transponder eingelernt werden kann. Dazu ist eine spezielle Autorisierungsverwaltung bei der Komponente oder beim Transponder erforderlich.

Ein alternatives Komponententausch-Warnsystem weist zwischen der zu überwachenden Komponente und einer anderen Komponente elektrische Leitungen oder einen Datenbus auf, so dass Prüfund Antwortsignale über die elektrischen oder auch optischen Leitungen übertragen werden können. Wird eine Komponente in ein anderes Verkehrsmittel neu eingebaut wird zum Freischalten ein Prüfsignal von der Komponente abgesendet und dann die Komponente aufgrund des Antwortsignals von der Sicherheitskomponente freigeschaltet. Da die Sicherheitskomponente nur unter Zerstörung aus dem Verkehrsmittel ausgebaut werden kann, wird die Sicherheitskomponente nicht in ein anderes Verkehrsmittel eingebaut werden können. Wird ein unautorisierter Einbau der Komponente in ein anderes Verkehrsmittel versucht, wird in dem anderen Verkehrsmittel die Antwort entweder überhaupt nicht oder durch eine nicht autorisierte Sicherheitskomponente erfolgen, so dass das

System nicht freigeschaltet werden kann und/oder ein Warnsignal, bspw. Warnblinkanlage angeschaltet, abgegeben werden kann.

Ein besonderer Vorteil der Erfindung besteht darin, dass die sich häufenden Fälle von Komponententausch innerhalb des Verkehrsmittels unterbunden werden. Insbesondere Sicherheitssysteme in Kraftfahrzeugen, wie Airbagsysteme, können dann zur Ersatzteilbeschaffung oder beim Fahrzeugdiebstahl nicht einfach ausgebaut und ohne weitere Kontrolle in gestohlene Fahrzeuge wieder eingebaut werden. Auf diese Weise kann auch der Diebstahlschutz innerhalb eines Kraftfahrzeugs nicht einfach durch Ausbau einer Komponente des Alarmsystems umgangen werden. Auf diese Weise wird der Komponentenaustausch verhindert, der Diebstahl von elektrischen Komponenten bei Neuwagen wird unterbunden und es entsteht ein verbesserter Diebstahlschutz bezogen auf sicherheitskritische und hochwertige Komponenten innerhalb des Kraftfahrzeugs. Ferner ist auch bei sicherheitskritischen Komponenten ein Schutz vor fehlerhaftem Einbau gegeben.

Bei der Erfindung lässt sich der Transponder oder die Berechtigungsprüfelektronik nur unter Zerstörung aus dem Verkehrsmittel ausbauen bzw. herunterladen. Der Transponder ist dabei bevorzugt an einer Stelle der Karosserie im. Verkehrsmittel derart mechanisch befestigt, dass der Ausbau des Transponders sichtbare Spuren am Verkehrsmittel hinterlässt. Dadurch ist dem Chassis des Verkehrsmittels der Transponder fest zugeordnet, wobei die Information über die Kraftfahrzeuggestellnummer beispielsweise in einem EPROM fest eingebrannt sein kann. Wenn nun die Komponente für die Zusammenarbeit mit diesem speziellen Transponder programmiert ist, so lässt sich diese Freischalten und der reguläre Betrieb der Komponente kann durchgeführt werden. Die Komponente kann beispielsweise ein Steuergerät für ein Airbagsystem oder ein Steuergerät für eine Motorelektronik sein.

Die Berechtigungsprüfelektronik kann auf einem Mikrochip zusammen mit dem Kommunikationsmittel an der eingebauten Komponente angeordnet sein. Der Mikrochip weist dann neben der Berechtigungsprüfelektronik einen Schwingkreis auf. Der Schwingkreis wird über die elektromagnetischen Wellen.des Transponders angeregt, so dass Energie zum Betrieb des Mikrochips vorhanden ist. Die Berechtigungsprüfelektronik wird aktiviert und erzeugt dann ein Antwortsignal für den Transponder. Parallel dazu kann eine Komponentenfreischaltung beim Erkennen eines autorisierten Transponders vorgesehen sein. Von dem Mikrochip kann dann entweder ein elektromagnetisches Signal erzeugt werden, welches das Ausgangssignal am Transponder in einem bestimmten Frequenzbereich dämpft, so dass es zu einem charakteristischen gedämpften Antwortsignal kommt. Andererseits kann aber auch ein Codewort vom Mikrochip an den Transponder zurückübermittelt werden, so dass aufgrund des Codeworts die Autorisierung am System durchgeführt werden kann.

Das induktive Mittel des Schwingkreises kann aber auch außerhalb des Mikrochips vorgesehen sein. Die Spule des Schwingkreises kann beispielsweise über elektrische Verbindungsleitungen mit dem elektrischen Mikrochip an der Komponente verbunden sein, so dass die Spule an der Karosserie neben dem Transponder angeordnet ist und elektrisch leitend mit der Komponente verbunden ist. Bei Unterbrechung der elektrischen Leitungen wird dann im Transponder ein Komponentenaustausch festgestellt. Andererseits kann der Mikrochip mit der Spule außen an der Komponente angeordnet sein und im Bereich des Transponders angeordnet sein, wenn die Komponente eingebaut ist.

Es gibt nun verschiedene Möglichkeiten, die Lehre der vorliegenden Erfindung in vorteilhafter Weise auszugestalten und weiterzubilden. Dazu ist einerseits auf die untergeordneten Ansprüche und andererseits auf die nachfolgende Erläuterung einer Ausführungsform zu verweisen. In der Zeichnung ist eine Ausführungsform des erfindungsgemäßen Komponententausch-Warnsystems zur Simulation dargestellt. Es zeigen jeweils in schematischer Darstellung,
- Fig. 1: den schematischen Aufbau des erfindungsgemäßen Komponententausch-Warnsystems, eingebaut im Verkehrsmittel und mit einer direkt am Transponder montierten Spule und
- Fig. 2: eine weitere Ausführungsform des erfindungsgemäßen Komponententausch-Warnsystems mit einer an der Komponente vorgesehenen Spule und dem mit Abstand dazu angeordneten Transponder des Verkehrsmittels.

Das Komponententausch-Warnsystem 1 ist in einem Kraftfahrzeug eingebaut und stellt den nicht autorisierten Ausbau bzw. den Einbau einer Komponente 2 in ein dafür nicht vorgesehenes Verkehrsmittel fest und schaltet die Komponente 2 elektronisch ab oder erzeugt eine Warnmeldung, beispielsweise ein Alarmsignal oder eine elektronische Nachricht für eine Überwachungszentrale. Das Komponententausch-Warnsystem 1 weist ein erstes Kommunikationsmittel 3 auf, dass fest mit der Karosserie des Kraftfahrzeugs verbunden ist. Es ist derart eingebaut, dass ein Ausbau des Kommunikationsmittels 3 nur unter Zerstörung der Karosserie 4 im Umfeld des Kommunikationsmittels 3 erfolgen kann. Das Kommunikationsmittel 3 ist ein sogenannter Transponder der einerseits Signale in Form von elektromagnetischen Wellen 5 aussendet und andererseits Antwortsignale 6 empfängt. Das zweite fest mit der Komponente 2 verbundene Kommunikationsmittel 7 erzeugt das Antwortsignal 6 auf die elektromagnetischen Wellen 5 des Transponders 3 und bezieht gleichzeitig mittels eines Schwingkreises 8 die für das Zurücksenden der Rückantwort 6 erforderliche Energie aus den elektromagnetischen Wellen 5 des Transponders 3.

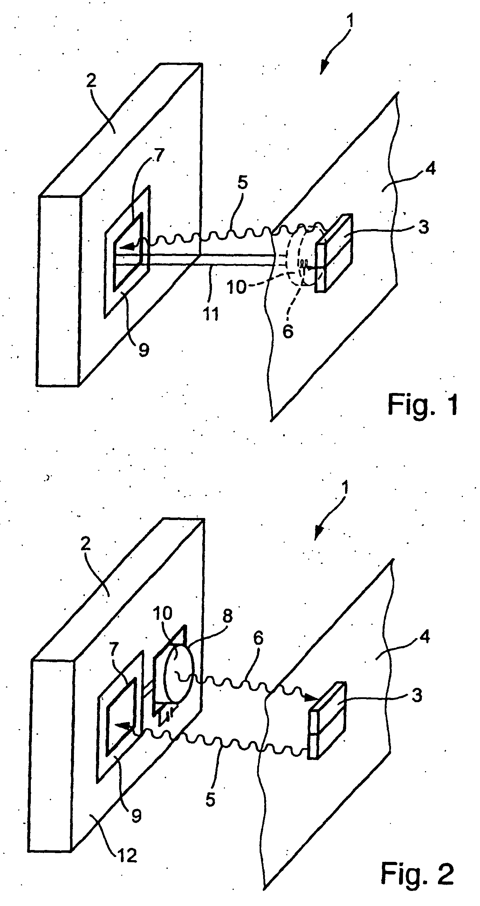

Bei der ersten Ausführungsform gemäß Fig. 1 ist an der Komponente 2 ein Mikrochip 9 vorgesehen, wobei die Spule 10 des Schwingkreises 8 benachbart zum Transponder 3 an der Karosserie 4 angeordnet ist. Elektrische Leitungen 11 verbinden die Spule 10 mit dem Mikrochip 9, wobei eine eingebaute Komponente 2 erkannt wird, wenn die elektrischen Leitungen 11 zwischen Spule 10 und Mikrochip 9 elektrisch leitend verbunden sind. Strahlt der Transponder 3 seine elektromagnetischen Wellen 5 in Richtung der Spule 10 des Mikrochips 9 aus, so erzeugt die Berechtigungsprüfelektronik auf dem Mikrochip 9 ein Antwortsignal 6, mit Hilfe dessen im Transponder 3 geprüft werden kann, ob die Komponente 2 in dem vorliegenden Kraftfahrzeug eingebaut werden darf. Andererseits kann aber auch in der Berechtigungselektronik auf dem Mikrochip 9 der Komponente 2 geprüft werden, ob die Komponente 2 in dem vorliegenden Kraftfahrzeug sich selbst Freischalten kann.

Das Komponententausch-Warnsystem 1 funktioniert entsprechend einem Verfahren, bei dem der Transponder 3 ein Prüfsignal an das Kommunikationsmittel 7 an der Komponente 2 aussendet, wobei das Kommunikationsmittel 7 an der Komponente 2 aus den elektromagnetischen Wellen 5 mit dem Prüfsignal des Transponders 3 die erforderliche Energie bezieht, um ein Prüfantwortsignal 6 für den Transponder 3 zu erzeugen. Das Prüfantwortsignal 6 wird an den Transponder 3 zurückübermittelt, so dass im Verkehrsmittel der Einbau einer neuen Komponente2 , die Einbauberechtigung und der Komponententyp geprüft werden kann. Die Berechtigungsprüfelektronik stellt den autorisierten Ausbau der Komponente 2 aus dem Kraftfahrzeug oder deren Einbau in ein anderes nicht autorisiertes Kraftfahrzeug fest und die im Verkehrsmittel eingebaute Komponente 2 kann sich bei Fehleinbau selbst sperren oder der Transponder 3 erzeugt ein Warnsignal für ein Diagnose- oder Überwachungssystem.

Der Transponder 3 wird an einer zentralen Stelle des Kraftfahrzeugs, beispielsweise im Bereich der Karosserie 4 derart mechanisch befestigt, dass er nur unter Zerstörung ausgebaut werden kann. Bei dieser Ausführungsform ist die Spule 10 des Schwingkreises 8 zur Ansteuerung des sich an der Komponente 2 befindenden Mikrochips 9 vorgesehen. Sobald der Mikrochip 9 die Unterbrechung der elektrischen Leitungen 11 zur Spule 7 erkennt, wird ein nicht autorisierter Zustand der Komponente 2 im Kraftfahrzeug erkannt.

In Fig. 2 ist eine zweite Ausführungsform des Komponententausch-Warnsystems 1 dargestellt. Dabei ist der Transponder 3 vollständig in der Karosserie 4 eingebaut und die Spule 10 ist zusammen mit dem Mikrochip 9 an der Komponente 2 angeordnet. Im eingebauten Zustand befindet sich die Spule 10 in der Nähe des Transponders 3, so dass der Mikrochip 9 seine Energie für die Berechnung und die Rücksendung des Prüfantwortsignals 6 aus dem elektromagnetischen Feld 5 des Transponders 3 entnehmen kann. Der Mikrochip 9 kann innerhalb oder außerhalb der Komponente 2 im Bereich einer Wand 12 der Komponente 2 angeordnet sein und kleiner als ein Stecknadelkopf sein. Ein entscheidender Vorteil des Komponententausch-Warnsystems 1 besteht darin, dass der elektronische Mikrochip 9 von der Stromversorgung der Komponente 2 unabhängig ist, da er die elektrische Energie aus dem elektromagnetischen Feld 5 des Transponders 3 entnimmt.

Das Prüfantwortsignal 6 des Mikrochips 9 kann derart vorgesehen sein, dass im Prüfsignal 5 am Transponder 3 bestimmte Frequenzen stark gedämpft sind und aus diesem charakteristischen Dämpfungsfeld das Vorhandensein der berechtigten Komponente 2 erkannt wird. Bei einer anderen Ausführungsform der vorliegenden Erfindung erzeugt der Transponder 3 ein codiertes Signal, aufgrund dessen sich der Transpondertyp oder das Kraftfahrzeug spezifisch erkennen lässt. Der Mikrochip 9 mit der Berechtigungsprüfelektronik kann dann aufgrund des empfangenen Signals 6 erkennen, ob die Komponente 2 in dem Kraftfahrzeug eingebaut ist, für das die Komponente 2 vorgesehen war. Ist die Komponente 2 in einem nicht autorisierten Kraftfahrzeug eingebaut, kann entweder ein Warnsignal für eine Dienstleistungszentrale, ein Alarmsignal, eine Wegfahrsperre oder ein Diagnosesignal erzeugt werden. Das Komponententausch-Warnsystem 1 kann auch derart programmiert sein, dass eine Komponente 2 in eine bestimmte Gruppe von Kraftfahrzeugen eingebaut werden kann, so dass eine Komponente 2 jeweils für eine bestimmte Anzahl oder Gruppe von Kraftfahrzeugen verwendet werden kann.

## Patentansprüche

1. Komponententausch-Warnsystem für ein Verkehrsmittel, welches den unautorisierten Aus- oder Einbau einer Komponente (2) des Verkehrsmittels überwacht, wobei das Komponententausch-Warnsystem (1) ein erstes fest mit dem Verkehrsmittel verbundenes Kommunikationsmittel (3), ein zweites mit der Komponente (2) verbundenes Kommunikationsmittel (7) und eine Berechtigungsprüfelektronik aufweist, die prüft, ob die mit dem zweiten Kommunikationsmittel (7) verbundene Komponente (2) in dem für diese vorgesehenen Verkehrsmittel autorisiert eingebaut ist, wobei ein Kommunikationsmittel (3 oder 7) ein Transponder ist, welcher ein Prüfsignal (5) an das andere Kommunikationsmittel (7 bzw. 3) aussendet, das andere Kommunikationsmittel (7 bzw. 3) aus dem elektromagnetischen Prüfsignal (5) die Energie bezieht und das andere Kommunikationsmittel (7 bzw. 3) ein Antwortsignal (6) erzeugt und an den Transponder (3) sendet, so dass die Berechtigungsprüfelektronik den nicht autorisierten Ausbau oder den Einbau einer nicht autorisierten Komponente (2) feststellt und in diesem Fall ein von der Berechtigungsprüfelektronik ansteuerbares Warn-/Aktormittel entweder die im Verkehrsmittel eingebaute Komponente (2) in Bezug auf die F nktion sperrt oder ein Alarmsignal absendet, und wobei das erste oder zweite Kommunikationsmittel (3 bzw. 7) nur unter Zerstörung aus dem Verkehrsmittel ausbaubar ist.

2. Komponententausch-Warnsystem für ein Verkehrsmittel, welches den unautorisierten Aus- oder Einbau einer Komponente (2) des Verkehrsmittels überwacht, wobei das Komponententausch-Warnsystem (1) ein erstes fest mit dem Verkehrsmittel verbundenes Kommunikationsmittel (3), ein zweites mit der Komponente (2) verbundenes Kommunikationsmittel (7) und eine Berechtigungsprüfelektronik aufweist, die prüft, ob die mit dem zweiten Kommunikationsmittel (7) verbundene Komponente (2) in dem für diese vorgesehenen Verkehrsmittel autorisiert eingebaut ist, wobei ein Kommunikationsmittel (3 oder 7) ein Transponder ist, welcher ein Prüfsignal (5) an das andere Kommunikationsmittel (7 bzw. 3) aussendet, das andere Kommunikationsmittel (7 bzw. 3) ein Antwortsignal (6) für den Transponder (3) derart erzeugt, dass im Prüfsignal (5) am Transponder (3) bestimmte Frequenzen stark gedämpft sind und aus diesem charakteristischen Dämpfungsfeld das Vorhandensein der berechtigten Komponente (2) erkannt wird und wobei die Berechtigungsprüfelektronik den nicht autorisierten Ausbau oder den Einbau einer nicht autorisierten Komponente (2) feststellt und in diesem Fall ein von der Berechtigungsprüfelektronik ansteuerbares Warn-/Aktormittel entweder die im Verkehrsmittel eingebaute Komponente (2) in Bezug auf die Funktion sperrt oder ein Alarmsignal absendet, und wobei das erste oder zweite Kommunikationsmittel (3 bzw. 7) nur unter Zerstörung aus dem Verkehrsmittel ausbaubar ist.

3. Komponententausch-Warnsystem nach Anspruch 1, **dadurch gekennzeichnet, dass** ein Mikrochip (9) an der eingebauten Komponente (2) angeordnet ist, der die Berechtigungsprüfelektronik und eines der beiden Kommunikationsmittel (3, 7) aufweist.

4. Komponententausch-Warnsystem nach Anspruch 1, **dadurch gekennzeichnet, dass** der Transponder (3) ein Prüfsignal (5) mit einer Transponderkennung aussendet und dass die der Komponente (2) zugeordnete Berechtigungsprüfelektronik feststellt, ob die Transponderkennung mit der als autorisiert eingetragenen Transponderkennung übereinstimmt.

5. Komponententausch-Warnsystem nach einem der Ansprüche 1 bis 4, **dadurch gekennzeichnet, dass** das mit der Komponente (2) verbundene Kommunikationsmittel (7) zur Übertragung des Prüfsignals (5) oder zur Energieversorgung des anderen Kommunikationsmittels (3 bzw. 7) ein induktives Mittel (10) aufweist, das als Bestandteil eines Schwingkreises (8) ein elektromagnetisches Signal (6) erzeugt.

6. Komponententausch-Warnsystem nach Anspruch 5, **dadurch gekennzeichnet, dass** das induktive Mittel (10) über eine elektrische Verbindung (11) mit der Komponente (2) verbunden ist und am Verkehrsmittel benachbart zum Transponder (3) bzw. zur Sicherheitskomponente montiert ist.

7. Komponententausch-Warnsystem nach einem der vorhergehenden Ansprüche, **dadurch gekennzeichnet, dass** die Berechtigungsprüfelektronik mit dem Kommunikationsmittel (7) in der Komponente (2) vorgesehen ist und die elektronische Funktion der Komponente (2) sperrt, wenn ein nicht autorisierter Transponder (3) ein Prüfsignal (5) aussendet.

## Claims

1. A component replacement warning system for a means of transport which monitors the unauthorised removal and installation of a component (2) of the means of transport, the component replacement warning system (1) comprising a first communication means (3) fixed to the means of transport, a second communication means (7) connected to the component (2) and an electronic authentication verification device which verifies whether the component (2) connected to the second communication means (7) is installed in the intended means of transport in an authorised manner, one communication means (3 or 7) being a transponder which emits a test signal (5) to the other communication means (7 or 3), the other communication means (7 or 3) deriving energy from the electromagnetic test signal (5) and the other communication means (7 or 3) generating a response signal (6) and sending it to the transponder (3) in such a manner that the electronic authentication verification device detects the unauthorised removal of the component (2) or the installation of an unauthorised component (2) and, in such a case, a warning/actuating device which can be actuated by the electronic authentication verification device either blocking the operation of the component (2) installed in the means of transport or emitting an alarm signal, it being possible to remove the first or second communication means (3 or 7) from the means of transport only by destroying it.

2. A component replacement warning system for a means of transport which monitors the unauthorised removal and installation of a component (2) of the means of transport, the component replacement warning system (1) comprising a first communication means (3) fixed to the means of transport, a second communication means (7) connected to the component (2) and an electronic authentication verification device which verifies whether the component (2) connected to the second communication means (7) is installed in the intended means of transport in an authorised manner, one communication means (3 or 7) being a transponder which emits a test signal (5) to the other communication means (7 or 3) and the other communication means (7 or 3) generating a response signal (6) for the transponder (3) in such a manner that certain frequencies are heavily damped in the test signal (5) at the transponder (3) and the presence of the authorised component (2) is detected from this characteristic damping field, the electronic authentication verification device detecting the unauthorised removal of the component (2) or the installation of an unauthorised component (2) and, in such a case, a warning/actuating device which can be actuated by the electronic authentication verification device either blocking the operation of the component (2) installed in the means of transport or emitting an alarm signal, it being possible to remove the first or second communication means (3 or 7) from the means of transport only by destroying it.

3. A component replacement warning system in accordance with claim 1,
**characterised in that**
a microchip (9) is positioned on the installed component (2) which contains the electronic authentication verification device and one of the two communication means (3, 7).

4. A component replacement warning system in accordance with claim 1,
**characterised in that**
the transponder (3) emits a test signal (5) with a transponder identification and the electronic authentication device assigned to the component (2) determines whether the transponder identification matches the registered authorised transponder identification.

5. A component replacement warning system in accordance with one of claims 1 to 4,
**characterised in that**
the communication means (7) connected to the component (2) has an inductive means (10) for transmitting the test signal (5) or for supplying energy to the other communications means (3 or 7) which generates an electromagnetic signal (6) as part of an oscillating circuit (8).

6. A component replacement warning system in accordance with claim 5,
**characterised in that**
the inductive means (10) is connected to the component (2) by an electrical connection (11) and is installed in the means of transport in the vicinity of the transponder (3) or the security component.

7. A component replacement warning system in accordance with one of the preceding claims,
**characterised in that**
the electronic authentication verification device is provided in the component (2) with the communication means (7) and the electronic operation of the component (2) is blocked if an unauthorised transponder (3) sends out a test signal.

## Revendications

1. Système d'avertissement d'échange d'une composante pour un moyen de transport, lequel surveille le démontage ou le montage non autorisé d'une composante (2) du moyen de transport, le système d'avertissement d'échange d'une composante (1) comportant un premier moyen de communication (3) solidement relié au moyen de transport, un second moyen de communication (7) relié à la composante (2) et une électronique de vérification de l'autorisation qui vérifie si l'installation de la composante (2), reliée au second moyen de communication (7), est autorisée dans le moyen de transport prévu pour elle, un moyen de communication (3 ou 7) étant un transpondeur, lequel envoie un signal de vérification (5) à l'autre moyen de communication (7 ou 3), l'autre moyen de communication (7 ou 3) tirant l'énergie du signal de vérification électromagnétique (5) et l'autre moyen de communication (7 ou 3) produisant un signal de réponse (6) et l'envoyant au transpondeur (3) de telle sorte que l'électronique de vérification de l'autorisation détermine le démontage non autorisé ou le montage d'une composante (2) non autorisée et, dans ce cas, un moyen d'avertissement/d'actionnement, pouvant être commandé par l'électronique de vérification de l'autorisation, bloque le fonctionnement de la composante (2) installée dans le moyen de transport ou envoie un signal d'alarme et le premier ou le second moyen de communication (3 ou 7) ne pouvant être démonté du moyen de transport qu'en étant détruit.

2. Système d'avertissement d'échange d'une composante pour un moyen de transport, lequel surveille le démontage ou le montage non autorisé d'une composante (2) du moyen de transport, le système d'avertissement d'échange d'une composante (1) comportant un premier moyen de communication (3) solidement relié au moyen de transport, un second moyen de communication (7) relié à la composante (2) et une électronique de vérification de l'autorisation qui vérifie si l'installation de la composante (2), reliée au second moyen de communication (7), est autorisée dans le moyen de transport prévu pour elle, un moyen de communication (3 ou 7) étant un transpondeur, lequel envoie un signal de vérification (5) à l'autre moyen de communication (7 ou 3), l'autre moyen de communication (7 ou 3) produisant un signal de réponse (6) pour le transpondeur (3) de telle sorte que, dans le signal de vérification (5) au niveau du transpondeur (3), des fréquences précises soient fortement atténuées et, à partir de ce champ d'atténuation caractéristique, la présence de la composante autorisée (2) soit reconnue, et l'électronique de vérification de l'autorisation constatant le démontage non autorisé ou le montage d'une composante (2) non autorisée et, dans ce cas, un système d'avertissement/d'actionnement, pouvant être commandé par l'électronique de vérification de l'autorisation, bloque le fonctionnement de la composante (2) installée dans le moyen de transport ou envoie un signal d'alarme, et le premier ou le second moyen de communication (3 ou 7) ne pouvant être démonté du moyen de transport qu'en étant détruit.

3. Système d'avertissement d'échange d'une composante selon la revendication 1, **caractérisé en qu'**une micropuce (9) est disposée sur la composante (2) installée, micropuce qui comporte l'électronique de vérification de l'autorisation et l'un des deux moyens de communication (3, 7).

4. Système d'avertissement d'échange d'une composante selon la revendication 1, **caractérisé en ce que** le transpondeur (3) envoie un signal de vérification (5) avec un code transpondeur et **en ce que** l'électronique de vérification de l'autorisation attribuée à la composante (2) détermine si le code transpondeur correspond ou non au code transpondeur saisi comme code autorisé.

5. Système d'avertissement d'échange d'une composante selon l'une quelconque des revendications 1 à 4, **caractérisé en ce que** le moyen de communication (7) relié à la composante (2) comporte, pour la transmission du signal de vérification (5) ou pour l'approvisionnement en énergie de l'autre moyen de communication (3 ou 7), un dispositif inductif (10) qui produit un signal électromagnétique (6) en tant que composant d'un circuit oscillant (8).

6. Système d'avertissement d'échange d'une composante selon la revendication 5, **caractérisé en que** le dispositif inductif (10) est raccordé à la composante (2) par le biais d'une connexion électrique (11) et est monté sur le moyen de transport, près du transpondeur (3) ou de la composante de sécurité.

7. Système d'avertissement d'échange d'une composante selon l'une quelconque des revendications précédentes, **caractérisé en ce que** l'électronique de vérification de l'autorisation est prévue avec le moyen de communication (7) dans la composante (2) et bloque le fonctionnement électronique de la composante (2) lorsqu'un transpondeur non autorisé (3) émet un signal de vérification (5).
